## Europäisches Patentamt
## European Patent Office
## Office européen des brevets

(19)

(11) Veröffentlichungsnummer: **0 101 977 B1**

# EUROPÄISCHE PATENTSCHRIFT

(12)

(45) Veröffentlichungstag der Patentschrift:
05.02.86

(51) Int. Cl.⁴: **B 60 T 8/18**

(21) Anmeldenummer: 83107693.0

(22) Anmeldetag: 04.08.83

(54) **Abwiegevorrichtung zur lastabhängigen Regelung insbesondere der Bremskraft von Fahrzeugen, insbesondere Schienenfahrzeugen.**

(30) Priorität: 05.08.82 DE 3229261

(43) Veröffentlichungstag der Anmeldung:
07.03.84 Patentblatt 84/10

(45) Bekanntmachung des Hinweises auf die Patenterteilung:
05.02.86 Patentblatt 86/6

(84) Benannte Vertragsstaaten:
AT BE CH DE FR GB IT LI LU NL SE

(56) Entgegenhaltungen:
DE - A - 1 455 098
DE - B - 1 201 392
DE - B - 1 279 058
DE - B - 1 780 045
FR - A - 1 393 384

(73) Patentinhaber: KNORR-BREMSE AG, Moosacher Strasse 80, D-8000 München 40 (DE)

(72) Erfinder: Gmelch, Xaver, Dreimühlenstrasse 10, D-8000 München 5 (DE)
Erfinder: Pöllinger, Hans, Rainfarnstrasse 65, D-8000 München 45 (DE)
Erfinder: Woseglen, Bernd, Angerweg 8, D-8000 München 83 (DE)

## Beschreibung

Die Erfindung bezieht sich auf eine Abwiegevorrichtung zur lastabhängigen Regelung insbesondere der Bremskraft von Fahrzeugen, insbesondere Schienenfahrzeugen, mit einer Gummifederung, die ein an eine starre Wandung angrenzendes, elastisch verformbares Federungsteil aufweist, und mit einem an der Wandung gehaltenen Wiegeventil mit einem die starre Wandung verschieblich durchgreifenden Stößel, der mit einer stirnseitigen Wirkfläche mitder abzuwiegenden Last in etwa proportionalen Kraft belasten wird und der im Wiegeventil mit einem eine Kolbenfläche bildenden Tellerteil verbunden ist, wobei die Wirkfläche kleiner als die Kolbenfläche ist, und mit einer in Abhängigkeit von der axialen Lage des Tellerteils gesteuerten, ein Ein- und ein Auslaßventil aufweisenden Ventileinrichtung zur Steuerung eines die Kolbenfläche in Andrückrichtung der Wirkfläche an das Federungsteil beaufschlagenden Druckmitteldruckes, wobei der Ventileinrichtung ein justierbar im Ventilgehäuse gehaltener Ventilsitz zugeordnet ist.

Mit der DE-A- 1 780 045 ist ein Wiegeventil mit den vorstehend genannten Merkmalen bekannt geworden. Das bekannte Wiedeventil weist ein Ventilgehäuse auf, in welchem eine ein- oder mehrteilige, elastisch verformbare Gummiplatte angeordnet ist, die einerseits auf ihrer ganzen Fläche an einer Druckplatte anliegt. Die Druckplatte ihrerseits liegt auf einer Fahrzeugfeder auf und wird von dieser gegen die Gummiplatte angedrückt. Andererseits ist die Gummiplatte in einem äußeren Ringbereich gegen eine breite Ringschulter des Ventilgehäuses abgestützt, nur im mittleren Flächenbereich liegt auf der Gummiplatte die stirnseitige Wirkfläche des Stößels an. Das bekannte Wiegeventil beinhaltet also eine als Gummifederung ansehbare Gummiplatte. Der Stößel dieses bekannten Wiegeventils ist zweiteilig mit einem im Ventilgehäuse axial verschieblich geführten, die Wirkfläche aufweisenden Stößelteil und einem an diesem anliegenden, am Tellerteil angeformten Stößelteil ausgebildet.

Aus der DE-B- 1 201 392 ist ein ähnliches Wiegeventil bekannt, bei welchem die Gummiplatte durch eine hydraulische Druckmeßdose ersetzt ist. Der Stößel dieses Wiegeventils besteht offensichtlich aus Montagegründen aus zwei fest und starr miteinander verschraubten Stößelteilen.

Aus der FR-A- 1 393 384 ist es bekannt, den inneren Druck einer Elastomer-Fahrzeugfeder durch eine Rohrleitung einem räumlich beachtlich entfernt angeordneten Stellglied für eine lastabhängige Bremssteuerung zuzuführen. Offensichtlich muß hierbei der innere Druck der Elastomerfederung durch ein hydraulisches Druckmittel übertragen werden.

Für Schienenfahrzeuge sind Gummifederungen unterschiedlicher Ausführungen bekannt, beispielsweise zeigen die DE-patentschriften 1 279 058 und 1 455 098 als Federungsteile einen ringförmigen Gummiwulst, welche zwischen einem unteren, die Öffnung des Gummiwulstes durchragenden und sich nach oben konisch verjüngenden Tragteil und einem den Gummiwulst außen umgebenden, sich ebenfalls nach oben konisch verjüngenden, oberen Gehäuseteil eingespannt sind. Beim Einfedern wird der Gummiwulst gegebenenfalls unter Abwälzung in den sich entsprechend der Einfederung verjüngenden Konusspalt zwischen dem Tragteil und dem Gehäuseteil hineingepresst.

Es ist Aufgabe der Erfindung, eine Abwiegevorrichtung der eingangs genannten Art derart auszugestalten, daß sie bei einfachem, funktionsgerechten Aufbau genaue, reproduzierbare Abwiege Druckmitteldrückeerstellt. Eine weitere Aufgabe oder Erfindung besteht darin, die Abwiegevorrichtung derart auszugestalten, daß sie auch große Abmessungs- und Funktionstoleranzen an der Gummifederung auszugleichen vermag, und einfach justierbar ist. Weiterhin soll die Abwiegevorrichtung die Möglichkeit zu einer wartungsgerechten Konstruktion bieten, obwohl derartige Wartungsarbeiten nur selten erforderlich sein sollen.

Diese Aufgabe wird gemäß der Erfindung dadurch gelöst, daß der Stößel in seiner Länge einstellbar ausgebildet ist. Falls dabei gemäß der weiteren Erfindung der Stößel zwei miteinander einstellbar verschraubte Stößelteile aufweist, zwischen welchen ein Reibglied eingeordnet ist, wobei das der Wirkfläche abgewandte Stößelende am Tellerteil anliegt, ergibt sich eine besonders einfache Justiermöglichkeit.

Es ist zweckmäßig, das eine Stößelteil bolzenartig und das andere Stößelteil ersteres umschließend hülsenartig auszubilden und beide Stößelteile seitens ihrer tellerseitigen Enden mit Profilflächen für das Ansetzen von Drehwerkzeugen zu versehen. Falls des weiteren bei Verwendung eines etwa parallel zur Ebene des Tellerteiles teilbar ausgebildeten Ventilgehäuses das der starren Wandung zugewandte Ventilgehäuseteil mit dem in diesem geführten Stößel alleinig an der starren Wandung befestigbar ist, wobei zwischen dem dem Tellerteil zugewandten Stößelende und einer Bezugsfläche am Ventilgehäuseteil ein Toleranzmaß vorgesehen ist, so ist eine besonders einfache und genaue Justierung der Stößellänge unter Berücksichtigung von Maßabweichungen der starren Wand und des Federungsteiles möglich.

Dabei ist es nach der weiteren Erfindung zweckmäßig, wenn das der starren Wandung abgewandte Ventilgehäuseteil den Tellerteil und die Ventileinrichtung beinhaltet und eine Öffnung aufweist, an deren Wandung ein ring- oder scheibenförmiger Ansatz des Tellerteiles verschieblich geführt ist. Bei abgenommenem Ventilgehäuseteil schützt der Ansatz den Innenraum des Ventilgehäuseteiles vor Verschmutzungen; zugleich ermöglicht eine derartige Teilung eine einfache Montage und Wartung aller pneumatischen Teile der Abwiegevorrichtung, da diese sich vollständig und geschützt im Inneren eines leicht handhabbaren Ventilgehäuseteiles befinden.

Um eine gute Führung des Stößels zu gewährleisten, kann es nach der weiteren Erfindung zweckmäßig sein, wenn das der starren Üandung zugewandte Ventilgehäuseteil einen die starre Wandung durchgreifenden, den Stößel umgebenden und wenigstens nahe seines wirkflächenseitigen Endes axial verschieblich führenden Ringansatz aufweist.

2

**0 101 977**

Weitere erfindungsgemäße Ausbildungsmöglichkeiten sind den abhängigen Ansprüche 8 und 9 entnehmbar.

In der Zeichnung ist ein Ausführungsbeispiel einer nach der Erfindung ausgebildeten Abwiegevorrichtung im Schnitt dargestellt.

Von einer Gummifederung eines Fahrzeuges ist ein kleiner Ausschnitt, umfassend einen kurzen Abschnitt einer starren Wandung 1 und einen kleinen Teil eines Federungsteiles 2 aus elastischem Werkstoff, dargestellt. Das an die Wandung 1 angrenzende und an dieser anliegende Federungsteil 2 kann beispielsweise dem ringwulstartigen Gummikörper nach der bereits erwähnten DE-B- 1 279 058 zugehören, und die starre Wandung 1 kann ein Ausschnitt aus dem oberen Gehäuse- bzw. Glockenteil der Gummifederung mitsamt deren Kunststoffauskleidung gemäß der erwähnten Patentschrift sein. Wesentlich ist, daß der dargestellte Abschnitt der starren Wandung 1 sich in einem Bereich befindet, an welchem in jedem Lastzustand des Fahrzeuges das Federungsteil 2 anliegt. Die Wandung 1 ist mit einer Durchbrechung 3 versehen, auf der dem Federungsteil 2 abgewandten Seite ist auf die Wandung 1 im Bereich der Durchbrechung 3 mittels Schrauben 4 ein aus wenigstens zwei Ventilgehäuseteilen 5 und 6 zusammengesetztes Ventilgehäuse 5, 6 aufgeschraubt. Die Schrauben 4 sind dabei zweckmäßig in in die Wandung 1 eingeschnittene Gewindesacklöcher 7 eingeschraubt.

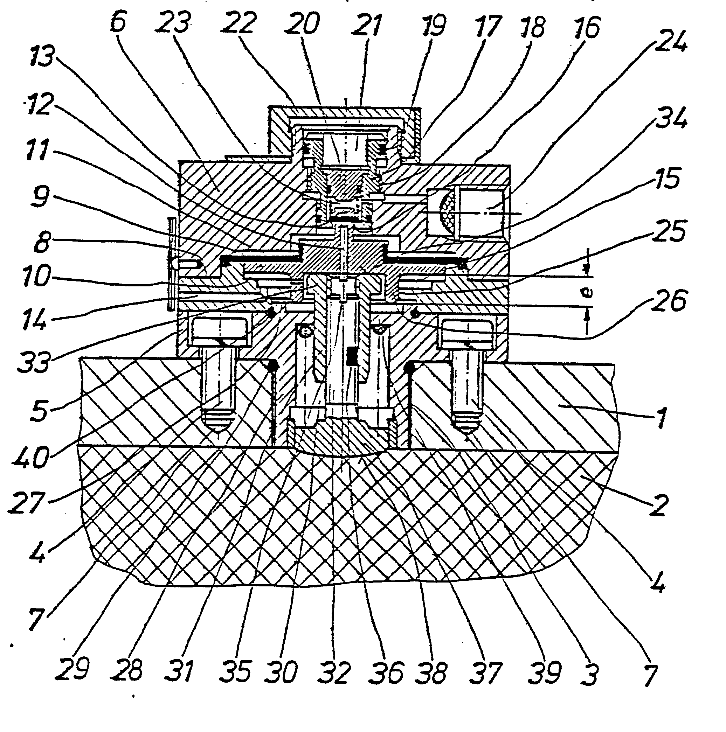

Das Ventilgehäuseteil 6 mit den in ihm enthaltenen Organen ist weitgehend ähnlich dem oberen Teil des Wiegeventils nach Fig. 4 der bereits erwähnten DE-A- 1 780 045 ausgebildet. Dieses Ventilgehäuseteil 6 beinhaltet somit einen Membrankolben, bestehend aus einer an ihrem Außenunfang an einer Gehäuseteilung 8 eingespannten Membrane 9, welche auf ihrer der Wandung 1 zugwandten Seite auf einem im Ventilgehäuseteil 6 verschieblich gelagerten Tellerteil 10 aufliegt, und welche andererseits einen Beaufschlagungsraum 11 begrenzt. Das Tellerteil 10 durchsetzt die Membrane 9 und endet im Beaufschlagungsraum 11 mit einem eine Entlüftungsbohrung 12 umgebenden Ventilsitz vor einer federbelasteten Doppelventildichtung 13. Die Entlüftungsbohrung 12 durchsetzt axial das Tellerteil 10 und mündet in einen unter diesem befindlichen, ständig über eine Gehäuseöffnung 14 mit der Atmospähre in Verbindung stehenden Raum 15. Der Doppelventildichtung 13 ist ein zweiter Ventilsitz 16 zugeordnet, der sich an einer die Doppelventildichtung 13 übergreifenden Einstellhülse 17 befindet, die über ein Gewinde 18 axial einstellbar und vermittels eines Dichtringes 19 abgedichtet mit dem Ventilgehäuseteil 6 verschraubt ist. Das obere Ende der Einstellhülse 17 ist mittels eines Stopfens 20 dicht verschlossen und der die Einstellhülse 17 aufnehmende Raum 21 ist nach außen durch einen mit dem Ventilgehäuseteil 6 dicht verbundenen Deckel 22 abgedeckt. Die Doppelventildichtung 13 bildet zusammen mit dem Ventilsitz 16 der Einstellhülse 17 ein Einlaßventil 13, 16 vom die Doppelventildichtung 13 aufnehmenden Innenraum 23 der Einstellhülse 17 zum Beaufschlagungsraum 11. Zusammen mit dem am Tellerteil 10 vorgesehenen, die Entlüftungsbohrung 12 umgebenden Ventilsitz bildet die Doppelventildichtung 13 ein Auslaßventil 10, 13 vom Beaufschlagungsraum 11 zur Atmosphäre. Der Innenraum 23 ist über einen Rohranschluß 24 ständig mit einer Druckmittelquelle, vorzugsweise einer Druckluftquelle verbunden und der im Beaufschlagungsraum 11 herrschende Druckmitteldruck bzw. Luftdruck ist über einen nicht dargestellten Rohranschluß ableit- und beispielsweise einer lastabhängigen Bremssteuerung des Fahrzeuges zuführbar.

Auf der der Wandung 1 und damit dem Ventilgehäuseteil 5 zugwandten Seite weist das Ventilgehäuseteil 6 eine in den Raum 15 mündende Öffnung 25 auf, welche von einem ringförmigen Ansatz 26 des Tellerteiles 10 durchgriffen ist. Der Ansatz 26 ist an der Wandung der Öffnung 25 mit gewissem Spiel verschieblich geführt, er schließt den Raum 15 bei abgenommenen Ventilgehäuseteil 5 gegen das Eindringen grober Verschmutzungen geschützt ab. Weiterhin weist das Ventilgehäuseteil 6 einen die Öffnung 25 umgebende Zentrierabsatz auf, in welchen ein ringförmiger Zentrieransatz 27 des Ventilgehäuseteiles 5 eingreift. Das Ventilgehäuseteil 5 besteht im wesentlichen aus einem plattenartigen Abschnitt, welcher einerseits auf der Wandung 1 aufliegt und mittels der Schrauben 4 an dieser gehalten ist und auf welchem andererseits das Ventilgehäuseteil 6 aufsitzt. Etwa mittig trägt das Ventilgehäuseteil 5 auf seiner der Wandung 1 zugwandten Seite einen Ringansatz 28, dessen Länge etwa der Stärke der Wandung 1 entspricht und welcher unter Zwischenlage eines Dichtringes 29 in die Durchbrechung 3 eingreift und diese wenigstens annähernd durchragt. Der Ringansatz 28 umschließt eine Öffnung 30 im Ventilgehäuseteil 5, in welcher ein aus zwei Stößelteilen 31 und 32 zusammengesetzter Stößel 31, 32 etwa rechtwinklig zur Wandung 1 verschieblich gelagert ist. Das dem Ventilgehäuseteil 5 zugwandte Stößelteil 31 ist hülsenförmig mit einem Innengewinde ausgebildet; an seinem der Wandung 1 abgewandten Ende ist es mit einem Kopfteil 33 versehen, mit welchem es in den vom Ansatz 26 umschlossenen Raum eingreift und am Tellerteil 10 anliegt. Der Kopfteil 33 ist an seinem Außenumfang in aus der Zeichnung nicht ersichtlicher Weise mit Schlüsselflächen zum Ansetzen eines Schraubenschlüssels versehen. Zwischen dem am Tellerteil 10 anliegenden Stößelende 34 und der dem Ventilgehäuseteil 5 zugwandten Stirnfläche des Zentrieransatzes 27 als Bezugsfläche ist ein Toleranzmaße vorgesehen. Der andere Stößelteil 32 weist einen bolzenartigen Abschnitt auf, mit welchem er in das Stößelteil 31 justierbar eingeschraubt ist; am dem Ventilgehäuseteil 5 zugwandten Ende ist der Stößelteil 32 mit einem Schlitz 35 zum Ansetzen eines Schraubenziehersversehen. Beide Stößelteile 31 und 32 tragen also an ihren dem Tellerteil 10 zugwandten Enden Profilflächen zum Ansetzen von Drehwerkzeugen, wodurch sie bei abgenommenen Ventilgehäuseteil 5 einfach und genau gegeneinander verschraubbar sind. Um ungewollte Relativverstellungen zwischen den beiden Stößelteilen 31 und 32 auszuschließen, befindet sich in deren gegenseitigem Verschraubungsabschnitt ein Reibglied 36, welches beide mit einer gewissen Reibkraft miteinander verbunden hält. Das Stößelteil 32 endet seitens des Federungsteiles 2 mit einem Kopfabschnitt 37, der mit einer leicht balligen Wirkfläche 38 auf der Oberfläche des Federungsteiles 2 aufsteht. Der Außenumfang des Kopfabschnittes 37 ist am Innenzylinder des Ringansatzes 28 verschieblich geführt. Eine in der Öffnung 30 befindliche Feder 39 drückt den Kopfabschnitt 37 gegen das Federungsteil 2 an. Die Feder 39 ist zwischen das Ventilgehäuseteil 5 und den Kopfabschnitt 37 mit Vorspannung eingesetzt.

3

Die beiden Ventilgehäuseteile 5 und 6 sind durch nicht dargestellte, leicht zugängliche Verschraubungen unter Zwischenlage eines das Eindringen von Verschmutzungen ausschließenden Dichtringes 40 miteinander fest verbunden. Es ist beispielsweise möglich, die Schrauben 4 diagonal gegenüberliegend an zwei Ecken des in Aufsicht etwa quadratischen Ventilgehäuseteiles 5 vorzusehen und die Verbindungsschrauben für die beiden Ventilgehäuseteile 5 und 6 an den hierzu versetzten Ecken der beiden Ventilgehäuseteile 5 und 6 anzuordnen.

Die Fläche der Wirkfläche 38 ist wesentlich kleiner als die wirksame Fläche der Membrane 9, welche etwa der als Kolbenfläche anzusehenden Oberfläche des Tellerteiles 10 entspricht.

Es sei angenommen, das mit der Abwiegevorrichtung ausgestattete Fahrzeug sei leer und die Abwiegevorrichtung befindet sich im aus der Zeichnung ersichtlichen Ruhezustand. Der Federungsteil 2 steht dabei unter dem zu tragenden Leergewicht des Fahrzeuges unter einer gewissen, relativ niedrigen Spannung und die Feder 39 drückt die ballige Wirkfläche 38 des Kopfabschnittes 37 geringfügig in die Oberfläche des Federungsteiles 2 ein derart, daß zwischen beiden eine gute Anlage gewährleistet ist. Die Länge des Stößels 31, 32 ist derart justiert, daß das Tellerteil 10 bei Auflage auf dem Stößelende 34 sowohl das Einlaßventil 13, 16 wie das Auslaßventil 10, 13 geschlossen hält. Im Beaufschlagungsraum 11 herrscht ein bestimmter, niedriger Druck, welcher proportional dem Leergewicht des Fahrzeuges ist, die Andrückung der Wirkfläche 38 an das Federungsteil 2 unterstützt und welcher die gegebenenfalls angeschlossene, nicht dargestellte Fahrzeugbremsanlage auf 'leeres Fahrzeug' einstellt. Auch die Einstellhülse 17 befindet sich dabei in einer bestimmten, den erwähnten, geschlossenen Einlaßventil 13, 16 und Auslaßventil 10, 13 entsprechenden Lage.

Wird die Belastung des Fahrzeuges vergrößert, so steigt die innere Spannung im Federungsteil 2 in wenigstens annähernd der Belastungszunahme entsprechender Weise an, wodurch der Federungsteil 2 unter Zurückdrücken des Kopfabschnittes 37 sich etwas zur Öffnung 30 hin ausstülpt und dabei geringfügig in den vom Ringansatz 28 umschlossenen Raum eindringt. Der Stößel 31, 32 wird also unter Mitnahme des Tellerteiles 10 nach oben verdrängt, wobei das Einlaßventil 13, 16 geöffnet wird und Druckluft aus dem Rohranschluß 24 sowie dem Innenraum 23 in den Beaufschlagungsraum 11 einströmt und in diesem eine Drucksteigerung bewirkt. Über die Membrane 9 wird somit das Tellerteil 10 verstärkt durch Druckmittelbeaufschlagung nach unten belastet, bei Erreichen einer bestimmten Reaufschlagungshöhe drückt es daher den Stößel 31, 32 unter Schließen des Einlaßventils 13, 16 in die aus der Zeichnung ersichtliche Lage zurück, wobei das Federungsteil 2 entgegen seiner erhöhten, inneren Spannung in seine Ausgangslage zurückgedrückt ist. Im Beaufschlagungsraum 11 herrscht dann bei geschlossenem Einlaß- und Auslaßventil 13, l6 und 10, 13 ein der gesteigerten Fahrzeugbelastung entsprechend gesteigerter Druck, welcher die bereits erwähnte Fahrzeugbremse auf entsprechend verstärkte Bremswerte einstellen kann. Bei weiterer Belastungssteigerungen des Fahrzeuges wiederholen sich unter jeweils entsprechender Steigerung des Beaufschlagungsdruckes im Beaufschlagungsraum 11 die vorstehend geschilderten Vorgänge.

Wird das Fahrzeug entlastet, so drücken die vereinten Kräfte von Druckmittelbeaufschlagung des Tellerteiles 10 und der Feder 39 den Kopfabschnitt 37 verstärkt in den in seiner inneren Spannung absinkenden Federungsteil 2 hinein, d. h. der Stößel 31, 32 mit dem Tellerteil 10 geht nach unten, wobei das Auslaßventil 10, 13 geöffnet wird und Druckluft aus dem Beaufschlagungsraum 11 durch die Entlüftungsbohrung 12 und die Gehäuseöffnung 14 zur Atmosphäre abströmt. Damit sinkt der Beaufschlagungsdruck im Beaufschlagungsraum 11, die vom Kopfabschnitt 37 auf den Federungsteil 2 ausceübte Druckkraft sinkt entsprechend, und bei Erreichen eines dem neuen Spannungszustand im Federungsteil 2 entsprechenden Kräftegleichgewichtes wird von der inneren Spannung des Federteiles 2 der Stößel 31, 32 mit dem Tellerteil 10 unter Schließen des Auslaßventiles 10, 13 wieder in die dargestellte Lage angehoben. Im Beaufschlagungsraum 11 herrscht dann ein verringerter, dem verringerten Belastungszustand des Fahrzeuges entsprechender Druck. Bei weiterer Entlastung des Fahrzeuges wiederholen sich diese Vorgänge, bis wieder der Leerzustand des Fahrzeuges und der diesem Leerzustand entsprechende Druck im Beaufschlagungsraum 11 erreicht sind.

Bei den Belastungsänderungen des Fahrzeuges etwaige auftretende Abwälzvorgänge des Federungsteiles 2 an der starren Wandung 1 beeinflußen die vorstehend geschilderten Vorgänge praktisch nicht, wesentlich ist lediglich, daß wenigstens im näheren Umkreis um die Durchbrechung 3 der Federungsteil 2 ständig an der Wandung 1 anliegt.

Bei der Montage der Abwiegevorrichtung wird zuerst das Ventilgehäuseteil 5 mit dem Stößel 31, 32 auf der starren Wandung 1 mittels der Schrauben 4 montiert. Sodann werden vorzugsweise mittels einer Lehre die beiden Stößelteile 31, 32 mittels Drehwerkzeugen derart gegeneinander verschraubt, daß das Toleranzmaß e einem bestimmten, vorgeschriebenen Wert entspricht. Sodann wird das Ventilgehäuseteil 6 mit dem in ihm enthaltenen Tellerteil 10 und den Ventileinrichtungen auf das Ventilgehäuseteil 5 aufgesetzt und mit diesem verbunden. Erforderlichenfalls kann anschließend nach Abnahme des Deckels 22 die Einstellhülse 17 derart justiert werden, daß unter bestimmter Fahrzeugbelastung und bestimmter Druckhöhe im Beaufschlagungsraum 11 das Einlaßventil 13, 16 und das Auslaßventil 10, 13 geschlossen sind.

Durch die Längenjustierung des Stößels 31, 32 sind Maßabweichungen der starren Wandung 1 sowie der Stärke des Ventilgehäuseteiles 5 ausgleichbar. Durch Justieren der Einstellhülse 17 kann der einer bestimmten Fahrzeugbelastung zuzuordnende Druck im Beaufschlagungsraum 11, also die Charakteristik der Abwiegevorrichtung, den jeweiligen Erfordernissen angepaßt werden. Ein Hineinschrauben der Einstellhülse 17 in das Ventilgehäuseteil 6 entspricht dabei einer Drucksteigerung im Beaufschlagungsraum 11 bei konstant bleibender Fahrzeugbelastung und umgekehrt.

Es kann zweckmäßig sein, das Toleranzmaß e abweichend zur vorstehend beschriebenen Ausführungsform nicht auf die Stirnfläche des Zentrieransatzes 27, sondern auf die Lage dor sich radial nach außen an den Zentrieransatz 27 anschließenden Auflagefläche des Ventilgehäuseteiles 5 für das Ventilgehäuseteil 6 zu beziehen. Da das Toleranzmaß e jedoch relativ unkritisch ist und relativ große Abweichungen aufweisen kann, ist hierdurch nur eine gewisse Steigerung der Einstellgenauigkeit bei geringfügiger Erschwerung der Justierarbeit erreichbar.

Die Abwiegevorrichtung ist nicht nur bei Gummifederungen der eingangs beschriebenen Art, sondern auch bei andersartig ausgestalteten, beispielsweise silentblockartigen Gummifederungen verwendbar.

Bei Überholungsarbeiten kann das Ventilgehäuseteil 6 abgenommen und in einer Ventilwerkstätte hinsichtlich seiner Kolben- und Ventileinrichtungen leicht überholt werden, während das Ventilgehäuseteil 5 getrennt hiervon überholoder austauschbar ist. Bei getrennt gelagertem Ventilgehäuseteil 6 schützt der Ansatz 26 mit seiner Führung an der Wandung der Öffnung 25 den Raum 15 vor Eindringen von Fremdkörpern; da auch die Rohranschlüsse in diesem Zustand durch Stopfen verschließbar sind, sind bei nachfolgender Montage des Ventilgehäuseteiles 6 keine Funktionsstörungen durch eingedrungene Fremdkörper zu erwarten. Im montiertem Zustand schützen die Dichtringe 29 und 40 sowie die Anlage des Federungsteiles 2 an der Wandung 1 die Innenräume der Abwiegevorrichtung vor dem Eindringen von Verschmutzungen.

Die Vorspannung der Feder 39 bestimmt mit die Kennlinienlage des Wiegeventils, d.h. die bei einer bestimmten Fahrzeugbelastung im Beaufschlagungsraum 11 herrschende Druckhöhe. Da jedoch gewisse Toleranzabweichungen der Feder 39 durch die vorstehend erläuterten Justierungen ausgleichbar sind, können die Toleranzwerte der Feder relativ groß gewählt werden. Es ist jedoch auch möglich, die Feder 39 in ihrer Vorspannung einstellbar , beispielsweise durch ein einstellbares Widerlager am Ventilgehäuse 5 einzuspannen, wodurch eine weitere Justiermöglichkeit für die Charakteristik der Abwiegevorrichtung gegeben wird.

**Patentansprüche**

1) Abwiegevorrichtung zur lastabhängigen Regelung insbesondere der Bremskraft von Fahrzeugen, insbesondere Schienenfahrzeugen, mit einer Gummifederung, die ein an einer starren Wandung (1) angrenzendes, elastisch verformbares Federungsteil (2) aufweist, und mit einem an der Wandung (1) gehaltenen Wiegeventil mit einem die starre Wandung (1) verschieblich durchgreifenden Stößel (31,32) der mit einer stirnseitigen Wirkfläche (38) mit einer der abzuwiegenden Last in etwa proportionalen Kraft belastet wird und der im Wiegeventil mit einem eine Kolbenfläche bildenden Tellerteil (10) verbunden ist, wobei die Wirkfläche kleiner als die Kolbenfläche ist, und mit einer in Abhängigkeit von der axialen Lage des Tellerteils (10) gesteuerten, ein Ein- und ein Auslaßventil (13,16 und 10,13) aufweisenden Ventileinrichtung zur Steuerung eines die Kolbenfläche in Andrückrichtung der Wirkfläche (38) an das Federungsteil (2) beaufschlagenden Druckmitteldruckes, wobei der Ventileinrichtung ein justierbar im Ventilgehäuse (5,6) gehaltener Ventilsitz (16) zugeordnet ist, dadurch gekennzeichnet, daß der Stößel (31, 32) in seiner Länge einstellbar ausgebildet ist.

2) Abwiegevorrichtung nach Anspruch 1, dadurch gekennzeichnet, daß der Stößel (31, 32) zwei miteinander einstellbar verschraubte Stößelteile (31 und 32) aufweist, zwischen welchen ein Reibglied (36) eingeordnet ist, und daß das der Wirkfläche (38) abgewandte Stößelende (34) am Tellerteil (10) anliegt.

3) Abwiegevorrichtung nach Anspruch 2, dadurch gekennzeichnet, daß ein Stößelteil (32) bolzenartig und das andere Stößelteil (31) ersteres umschließend hülsenartig ausgebildet ist, und daß beide Stößelteile (31 und 32) seitens ihrer tellerseitigen Enden Profilflächen (Schlitz 35) für das Ansetzen von Drehwerkzeugen tragen.

4) Abwiegevorrichtung nach einem oder mehreren der vorstehenden Ansprüche, wobei das Ventilgehäuse (5, 6) etwa parallel zur Ebene des Tellerteiles (10) teilbar ausgebildet ist, dadurch gekennzeichnet, daß das der starren Wandung (1) zugewandten Ventilgehäuseteil (5) mit den in diesem geführten Stößel (31, 32) alleinig an der starren Wandung (1) befestigbar ist und daß zwischen dem den Tellerteil (10) zugewandten Stößelende (34) und einer Bezugsfläche am Ventilgehäuseteil (5) ein Toleranzmaß (e) vorgesehen ist.

5) Abwiegevorrichtung nach Anspruch 4, dadurch gekennzeichnet, daß das der Wandung (1) abgewandte Ventilgehäuseteil (6) den Tellerteil (10) und die Ventileinrichtung beinhaltet und eine Öffnung (25) aufweist, an deren Wandung ein ring- oder scheibenförmiger Ansatz (26) des Tellerteiles (10) verschieblich geführt ist.

6) Abwiegevorrichtung nach Anspruch 4 oder 5, dadurch gekennzeichnet, daß das der starren Wandung (1) zugewandte Ventilgehäuseteil (5) einen die starre Wandung (1) durchgreifenden, den Stößel (31, 32) umgebenden und wenigstens nahe seines wirkflächenseitigen Endes axial verschieblich führenden Ringansatz (28) aufweist.

7) Abwiegevorrichtung nach einem oder mehrern der vorstehenden Ansprüche, dadurch gekennzeichnet, daß eine den Stößel (31, 32) in Andrückrichtung an das Federungsteil (2) belastende, vorgespannte Feder (39) vorgesehen ist.

8) Abwiegevorrichtung nach Anspruch 6 und 7, dadurch gekennzeichnet, daß die Feder (39) zwischen dem wandungsseitigen Ventilgehäuseteil (5) und einem federungsteilseitigen im Ringsatz (28) geführten Kopfabschnitt (37) des Stößels (31, 32) eingespannt ist.

## Claims

1. Weighing arrangement for load-dependent regulation of, more particularly, the brake force of vehicles, more particularly rail vehicles, witha rubber suspension, which has a spring portion (2) which adjoins a rigid wall (1) and which is elastically deformable, and with a weighing valve, which is held on the wall (1), with a plunger (31,32) which passes through the rigid wall (1) in a shiftable manner, which with an active area (33) at the front is loaded with a force which is substantially proportional to the load to beweghed and which is connected in the weighing valve wth a plate portion (10) forming a piston area, in which case the active area is smaller than the piston area, and with a valve device, which is controlled as a function of the axial position of the plate portion (10) and which has an inlet valve and an outlet valve (13,16 and 10, 13), for the control of a pressure medium pressure which acts on the piston area in the direction in which the active area (33) presses against the spring portion (2), a valve seat (16), which is held in the valve housing (5, 6) in an adjustable manner, being coordinated with the valve device, characterised in that the plunger (31,32) is developed so that its length may be adjusted.

2. Weighing arrangement according to claim 1, characterised in that the plunger (31,32) has two plunger portions (3l and 32) which are screwed together in an adjustable manner and between which a friction member (36) is arranged and in that the plunger end (34) which is remote from the active area (38) rests against the plate portion (10).

3. Weighing arrangement according to claim 2, characterised in that one plunger portion (32) is developed like a bolt and the other plunger portion (31) is developed like a sleeve enclosing the former portion and in that both plunger portions (31 and 32) on the side of their ends on the plateside bear profiled areas (slot 35) for the attachment of lathe tools.

4. Weighing arrangement according to one or several of the preceding claims, in which the valve housing (5, 6) is developed so that it is divisible substantially parallel to the plane of the plate portion (10), characterised in that the valve housing portion (5) which is remote from the rigid wall (1) with the plungers (31, 32) guided in said portion may be secured exclusively to the rigid wall (1) and in that a measure of tolerance (e) is provided between the end (34) of the plunger which is remote from the plate portion (10) and a reference area on the valve housing portion (5).

5. Weighing arrangement according to claim 4, characterised in that the valve housing portion (6) which is remote from the wall (1) contains the plate portion (10) and the valve device and has an opening (25) on whose wall a ring-or disk-shaped attachment (26) of the plate portion (10) is guided in a shiftable manner.

6. Weighing arrangement according to claim 4 or 5, characterised in that the valve housing portion (5) which is remote from the rigid wall (1) has a ring attachment (28) which passes through the rigid wall (1), which surrounds the plunger (31, 32) and which leads in an axially shiftable manner at least close to its end on the active area side.

7. Weighing arrangement according to one or several of the preceding claims, characterised in that provision is made for a pretensioned spring (39) which loads the plunger (31,32) in the direction in which there is a pressing action against the spring portion (2).

8. Weighing arrangement according to claim 6 and 7, characterised in that the spring (39) is stretched between the valve housing portion (5) on the wall side and a head section (37) of the plunger (31, 32) guided in the ring attachment (23) on the spring portion side.

## Revendications

1. Dispositif de pesée pour le réglage, en fonction de la charge, en particulier de la force de freinage de véhicules, notamment de véhicules sur rails, avec une suspension en caoutchouc qui comporte un élément élastiquement déformable (2) jouxtant une paroi rigide (1), et avec une soupape de pesée maintenue sur la paroi (1) et comportant un poussoir (31, 32) traversant à coulissement la paroi rigide (1) et chargé par une surface frontale active (38) avec une force qui est à peu proportionnelle à la charge à peser, ledit poussoir étant relié dans la soupape de pesée à un élement en forme de plateau (10) qui forme une surface de piston et la surface active étant inférieure à la surface du piston, et avec un dispositif a soupape commandé en fonction de la position axiale de l'élément de plateau (10), comportant une soupape d'admission et une soupape d'évacuation (13, 16 et 10, 13), pour contrôler la pression d'un milieu sous pression chargeant la surface du piston dans le sens de l'application de la surface active (38) contre l'élément élastiquement déformable (2), un siege de soupape (16), maintenu de façon réglable dans le carter de soupape (5, 6), étant associé au dispositif à soupape, caractérisé par le fait que le poussoir (31, 32) est réalisé de façon à permettre le réglage de sa longueur.

2. Dispositif de pesée selon la revendication 1, caractérisé par le fait que le poussoir (31, 32) comporte deux éléments de poussoir (31 et 32) qui sont vissés entre eux de façon réglable, et entre lesquels est disposé un élément de friction (36), et que l'extrémité de poussoir (34), qui est éloigmée de la surface active (38), porte contre l'élément de plateau (10).

3. Dispositif de pesée selon la revendication 2, caractérisé par le fait qu'un élément de poussoir (32) est réalisé à la manière d'un boulon et l'autre élément de poussoir (31) est réalisé à la maniere d'une douille qui entoure le premier élément de poussoir, et que les deux éléments de poussoir (31 et 32) portent, du côté de leurs extrémités qui sont voisines du plateau, des surfaces profilées (fentes pour l'application d'outil manipulé en

**0 101 977**

rotation).

4. Dispositif de pesée selon une ou plusieurs des revendications précédentes, du type dans lequel le carter de soupape (5, 6) est réalisé de façon à etre subdivisé à peu près parallelement au plan de l'élément de plateau (10), caractérisé par le fait que l'élément de carter de soupape (5) qui est proche de la paroi rigide (1) est seul susceptible d'etre fixé, avec le poussoir (31, 32) qui y est guidé, à la paroi rigide, et qu'entre l'extrémité de poussoir (34) qui est proche de l'élément de plateau (10) et une surface de référence du carter de soupape (5), il est prévu une mesure de tolérance (e).

5. Dispositif de pesée selon la revendication 4, caractérisé par le fait que l'élément de carter de soupape (6), qui est éloigné de la paroi (1), comporte l'élément de plateau (10) et le dispositif à soupape, et présente une ouverture (25) entre la paroi de laquelle est guidé à coulissement un appendice en forme d'anneau ou de disque (26) de l'élément de plateau (10).

6. Dispositif de pesée selon la revendication 4 ou 5, caractérisé par le fait que l'élément de carter de soupape (5), qui est voisin de la paroi rigide (1), comporte un appendice annulaire (28) qui traverse la paroi rigide (11), qui entoure le poussoir (31, 32) et qui guide au moins pres de son extrémité axiale qui est située du côté de la surface active.

7. Dispositif de pesée selon une ou plusieurs des revendications précédentes, caractérisé par le fait qu'il est prévu un ressort préarmé (39) qui charge le poussoir (31, 32) dans le sens de l'application contre l'élément élastiquement déformable (2).

8. Dispositif de pesée suivant les revendications 6 et 7, caractérisé par le fait que le ressort (39) est armé entre la partie du carter de soupape (5) qui est située du côté de la paroi et une section de tète (37) du poussoir (31, 32), située du côté de élastiquement déformable et guidée dans l'appendice annulaire (28).